# EUROPÄISCHE PATENTSCHRIFT

(11) **EP 1 767 755 B1**
(45) Veröffentlichungstag und Bekanntmachung des Hinweises auf die Patenterteilung: **19.01.2011**
(21) Anmeldenummer: 06018510.5
(22) Anmeldetag: 05.09.2006
(51) Int. Cl.: F01N 3/20, F02B 37/18

(54) **Mittels Abgasturbolader aufgeladene Brennkraftmaschine mit einem Abgasstrang mit SCR-Katalysator(en)**
Turbo charged combustion engine with an SCR catalyst
Moteur à combustion suralimenté par turbo compresseur et comprenant un catalyseur SCR

(30) Priorität: 22.09.2005 DE 102005045029
(43) Veröffentlichungstag der Anmeldung: 28.03.2007
(73) Patentinhaber: MAN Nutzfahrzeuge Aktiengesellschaft, 80976 München (DE)
(72) Erfinder: Stiermann, Erwin, Dipl.-Ing., 86356 Neusäss (DE)

(56) Entgegenhaltungen:
- EP-A- 0 468 919
- WO-A-01/96718
- WO-A-97/36676
- US-A1- 2004 194 447

## Beschreibung

Die Erfindung betrifft eine mittels Abgasturbolader aufgeladene Brennkraftmaschine mit Merkmalen der im Oberbegriff des Anspruchs 1 angegebenen Art.

### Stand der Technik:

Aus der WO 97/36676 A ist es bekannt, eine Harnstoff-Wasser-Lösung in eine Vergasungskammer einzuspeisen, die zumindest teilweise in Kontakt mit dem Abgasstrom stromauf einer Abgasturbine steht und dabei die Wärme des Abgases für die Harnstoffvergasung nutzt. Das in der Vergasungskammer erzeugte Ammoniak wird stromab davon, jedoch vor der Abgasturbine in den Abgasstrom eingeleitet. Dieser Ort der Anordnung der Vergasungskammer stromauf der Abgasturbine ist aber nur solange zweckdienlich, als die Temperatur des Abgases einen genügend hohen Wert von etwa 350°-400° C aufweist. Wenn das Abgas einen niedrigeren Temperaturlevel hat, dann wird eine zusätzliche elektrische Heizung für die Vergasungskammer aktiviert, um diese auf einen für die Harnstoff-Vergasung hinreichend hohen Temperaturlevel zu bringen. Solche energieverzehrenden Zusatzheizungen sind jedoch nach Möglichkeit zu vermeiden.

### Technologischer Hintergrund der Erfindung:

Für die selektive katalytische Reduktion (SCR) von NOₓ im Abgas von Dieselmotoren wird als Reduktionsmittel Ammoniak (NH₃) verwendet. Dieses ist durch Thermolyse einer Harnstoff-Wasser-Lösung oder festem Harnstoff zu erzeugen. Hierzu gibt es verschiedene Möglichkeiten sowie Arten von Ammoniakreaktoren. Im einfachsten Fall wird eine Harnstoff-Wasser-Lösung direkt in das heiße Abgas vor dem/den SCR-Katalysator(en) eingedüst. Nachteilig ist dabei, dass der Anteil verdampften Wassers gering ist und auch bei Temperaturen von 400°C nur eine geringe Zersetzung des Harnstoffs in Ammoniak (NH₃) und Isocyansäure (HNCO) erfolgt, was den Wirkungsgrad des/der SCR-Katalysator(en) absenkt. Eine katalytische Thermolyse der Harnstoff-Wasser-Lösung mittels eines Hydrolysekatalysators im Nebenstrom oder von festem Harnstoff in einem Ammoniakreaktor in einem Abgashilfsstrom als Wasserdampfträger ermöglichen eine qualitativ hohe Erzeugung von isocyansäurefreiem Ammoniak. Harnstoff ist ein salzartiger Feststoff, der bei ca. 133°C schmilzt und durch schnelle bzw. Blitz-Thermolyse bei Temperaturen zwischen 350°-400°C verdampft und sich dabei Ammoniak (NH₃) und Isocyansäure (HNCO) bildet, nach

(NH₂)₂CO → NH₃ + HNCO.

Aufgrund des Vorhandenseins von Wasserdampf im Ammoniakreaktor wird die Isocyansäure in einem zweiten Schritt ebenfalls in Ammoniak und Kohlendioxid umgewandelt, nach

HNCO + H₂O → NH₃ + CO₂.

Diese Reaktion verhindert durch die Eliminierung der zur Polymerisation neigenden Isocyansäure die Bildung fester Zersetzungsprodukte wie Cyanursäure und ermöglicht letztendlich die Bereitstellung eines Ammoniak enthaltenden Gasgemisches, das keine zur Ablagerung an der Abgasleitung neigenden Bestandteile enthält.

Hydrolysekatalysatoren werden entweder in außerhalb einer Abgasleitung angeordneten fremdbeheizten Ammoniakreaktoren oder intern von Abgasleitungen als dann abgasbeheizte Ammoniakreaktoren verwendet. Solche Hydrolysekatalysatoren verteuern die Abgasnachbehandlungssysteme in nicht unbeträchtlichem Umfang gegenüber solchen Systemen, die ohne diese auskommen. Außerdem sind nach dem Abgasturbolader in der Abgasleitung angeordnete Hydrolysekatalysatoren mit Abgas beaufschlagt, dessen Temperaturniveau schon relativ weit abgesenkt ist, je nach Lastzustand der Brennkraftmaschine sogar auch unter eine Temperatur, mit der keine günstige Hydrolyse des Harnstoffs mehr möglich ist.

Es ist daher Aufgabe der Erfindung, einen Weg aufzuzeigen, wie auf Hydrolysekatalysatoren zur Ammoniakerzeugung verzichtet werden kann, trotzdem aber die Bildung schädlicher fester Zersetzungsprodukte vermeidbar ist.

Diese Aufgabe ist durch die im Kennzeichen des Anspruchs 1 angegebene Erfindung gelöst.

Vorteilhafte Ausgestaltungen und Weiterbildungen der erfindungsgemäßen Lösung sind in den Unteransprüchen angegeben.

Die Erfindung geht von folgenden Überlegungen aus.

Wollte man bei externen Ammoniakreaktoren auf eine elektrische Beheizung der Verdampfungs-/Hydrolysekammer verzichten, so musste man sich nach einer anderen verfügbaren Wärmequelle umsehen. Wärmequellen, die die nötige Temperatur im Bereich von 400°C oder höher zur Verfügung stellen, sind an einer Brennkraftmaschine nur sehr motornah zu finden und müssen am Verbrennungsprozess beteiligt oder diesen unmittelbar nachgeordnet sein. Die Erfindung greift diesbezüglich den Abgasturbolader als Wärmequelle auf, dessen heiße Turbinengehäuseaußenwand je nach Lastzustand eine mehr oder weniger hohe thermische Abstrahlung bewirkt. Diese hohe thermische Abstrahlung verpufft normalerweise ungenützt bzw. wird zwecks Vermeidung von Hitzeschäden im Umfeld durch einen Kühlluftstrom abgesenkt.

Die Erfindung macht sich um diese hohe thermische Abstrahlung der Turbinengehäuseaußenwand dadurch zu Nutze, dass diese als Wärmequelle für die Ammoniakerzeugung herangezogen wird. Hierzu wird ihr ein Ammoniakreaktor unmittelbar zugeordnet. Dessen Verdampfungs-/Hydrolysekammer wird demnach durch die thermische Abstrahlung der Turbinengehäuseaußenwand beheizt. Eine weitere Beheizung der Verdampfungs-/Hydrolysekammer erfolgt durch das ihr über einen Teilstrom zugeführte Abgas, das - weil vor der Abgasturbine in deren Einlassbereich oder aus der Abgasleitung bzw. dem Abgaskrümmer über einen Kanal abgezweigt - noch ein sehr hohes Temperaturniveau von ca. 700-750°C hat. Dieses Abgas fungiert auch als Lieferant für den Wasserdampf, der für die Umsetzung der bei der thermischen Zersetzung des Harnstoffs entstehenden Isocyansäure in NH₃ und CO₂ notwendig ist, und der so dazu beiträgt, dass korrosiv wirkende Harnstoffzersetzungsprodukte wie Cyanursäure nicht entstehen können.

Der Ammoniakreaktor ist über eine Zuführleitung mit einer Dosiereinrichtung und diese wiederum mit einem Vorratsbehälter entweder für eine Harnstoff-Wasser-Lösung oder festen Harnstoff, vorzugsweise kugelförmiger Harnstoffprills vorkonfektionierter Größe, verbunden. Mittels der Dosiereinrichtung wird der betreffende feste oder flüssige Betriebsstoff in geregelter Menge über die Zuführleitung an geeigneter Stelle in die Verdampfungs-/Hydrolysierungskammer des Ammoniakreaktors eingedüst bzw. eingeschossen.

Für die Anordnung bzw. Realisierung des Ammoniakreaktors am Turbinengehäuse des Abgasturboladers gibt es mehrere Möglichkeiten.

Eine Möglichkeit besteht darin, den Ammoniakreaktor baulich mit dem Turbinengehäuse des Abgasturboladers zu einer Einheit zu vereinigen, dergestalt, dass die Verdampfungs-/Hydrolysekammer innen durch die Turbinengehäuse-Außenwand und außen durch eine an letzterer mit angegossene Reaktor-Außenwand begrenzt ist.

Eine andere, wenn auch weniger günstige Möglichkeit besteht darin, den Ammoniakreaktor mit einem geschlossenen, die Verdampfungs-/Hydrolysierungskammer umfassende Gehäuse als Baueinheit herzustellen und dann außen am Turbinengehäuse des Abgasturboladers zu befestigen. Dabei besteht zumindest die Innenwand des Reaktorgehäuses aus hochtemperaturfestem, hochwärmeleitendem und korrosionsfestem metallischen Material. Diese Innenwand des Reaktorgehäuses ist exakt an die Außenform der Turbinengehäuse-Außenwand angepasst, so dass sie sich in Anbaulage des Ammoniakreaktors innig an die Turbinengehäuse-Außenwand anschmiegt und deren thermische Abstrahlung aufnimmt.

Die erfindungsgemäße Anordnung des Ammoniakreaktors außen am Turbinengehäuse des Abgasturboladers hat auch den zusätzlichen Effekt, das der Ammoniakreaktor praktisch auch einen Hitzeschild bildet, wodurch die thermischen Abschirmmaßnahmen vereinfacht und die Kühlgebläseleistung reduziert werden können.

Weitere Details sowie Ausgestaltungen der erfindungsgemäßen Lösung sind in den Unteransprüchen gekennzeichnet.

Nachfolgend ist die Erfindung anhand mehrerer in der Zeichnung dargestellter Beispiele noch näher erläutert.

In der Zeichnung zeigen:
- Fig. 1: einen Schnitt durch einen Turbolader mit einem mit dem Turbinengehäuse bau- lich vereinigten Ammoniakreaktor,
- Fig. 2: einen Schnitt durch einen Turbolader mit einer anderen Ausführung eines mit dem Turbinengehäuse baulich vereinigten Ammoniakreaktors,
- Fig. 3: schematisch einen Querschnitt durch ein Turbinengehäuse eines Turboladers mit baulich mit diesen vereinigten Ammoniakreaktor,
- Fig. 4: ein Beispiel für eine Düse bzw. ein Kanalendstück, und
- Fig. 5: einen zugehörigen Düsen- bzw. Kanalendstück-Halter.

In der Zeichnung ist ein Abgasturbolader mit 1, dessen Abgasturbine mit 2 und dessen Verdichter mit 3 bezeichnet. In Verbindung mit der Erfindung ist nur die Abgasturbine 2 interessant. Deren Turbinenrad ist mit 4 und deren Turbinengehäuse ist mit 5 bezeichnet. Dessen Außenwand ist mit 6, der Turbinen-Einlass mit 7 und der Turbinen-Ausgang mit 8 bezeichnet.

Die Abgasturbine 2 ist mit ihrem Turbinen-Einlass 7 an einem Abgasleitungsabschnitt, wie Krümmer oder Abgassammelleitung, angeschlossen, über den sie das von einer ebenfalls nicht dargestellten Brennkraftmaschine, insbesondere Dieselmotor eines Fahrzeugs, ausgestoßene Abgas gemäß Pfeil 9 zugeführt bekommt. Am Auslass 8 der Abgasturbine 2 schließt sich eine Abgasleitung 10 an, in der stromab des Abgasturboladers eine Abgasnachbehandlungseinrichtung mit wenigstens einem SCR-Katalysator und wenigstens ein Schalldämpfer angeordnet sind.

Der Verdichter 3 des Abgasturboladers saugt gefilterte Luft an, verdichtet diese und führt sie dann über eine Ladeluftleitung der Brennkraftmaschine zu.

Ein Ammoniakreaktor 11 ist erfindungsgemäß außen am Turbinengehäuse 5 - dessen thermische Abstrahlung für eine Ammoniakerzeugung nutzend - angeordnet. Er weist eine Verdampfungs-/Hydrolysierungskammer 12 auf, in die an geeigneter Stelle 13 entweder eine Harnstoff-Wasser-Lösung oder fester Harnstoff, z. B. in Form von vorkonfektionierten, kugelförmigen Harnstoffprills, in dosierter Menge eingespeist wird.

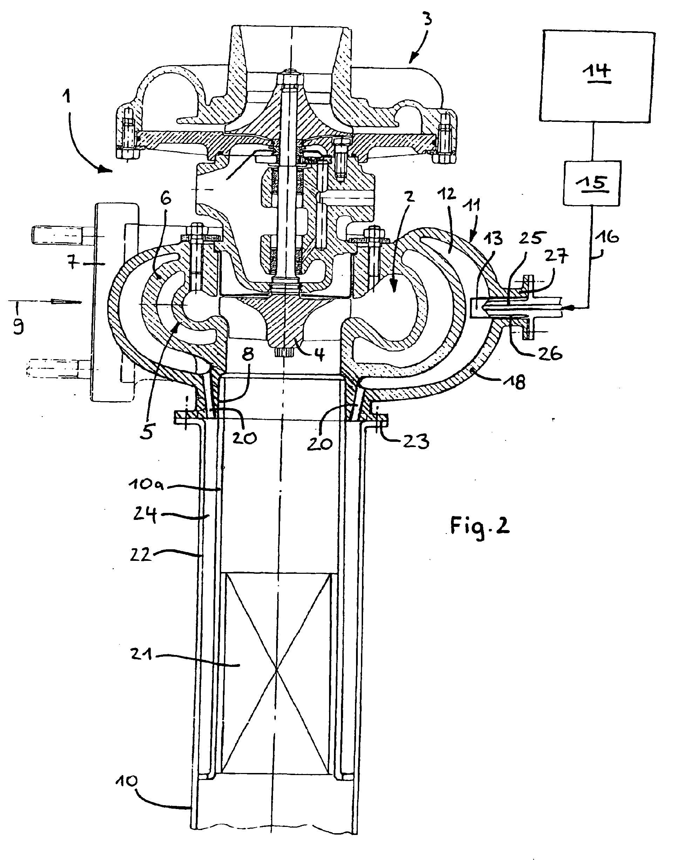

Wie in Fig. 2 gezeigt, wird dieser Betriebsstoff - Harnstoffprills oder Harnstoff-Wasser-Lösung - in einem Vorratsbehälter 14 bevorratet und mittels einer Dosiereinrichtung 15 in einer im Hinblick auf den Ammoniakbedarf geregelten Menge über eine Zuleitung 16 und eine Düse 17 in die Verdampfungs-/Hydrolysierungskammer 12 eingespeist.

In den dargestellten Beispielen bildet der erfindungsgemäße Ammoniakreaktor 11 mit dem Turbinengehäuse 5 des Abgasturboladers 1 eine bauliche Einheit, bei der die Verdampfungs-/Hydrolysierungskammer 12 innen durch die Turbinengehäuse-Außenwand 6 und außen durch eine an letzterer mit angegossene Reaktor-Außenwand 18 begrenzt ist.

In einer nicht dargestellten alternativen Bauweise kann der Ammoniakreaktor 11 als eigenständige Einheit vorgefertigt und dann am Turbinengehäuse 5 befestigt werden. In diesem Fall weist der Ammoniakreaktor 11 ein geschlossenes Gehäuse auf, das die Verdampfungs-/Hydrolysierungskammer umfasst. Dabei besteht zumindest die Innenwand des Reaktorgehäuses aus hochtemperaturfesten, hochwärmeleitenden und korrosionsfestem metallischen Material. Diese Innenwand des Reaktorgehäuses ist exakt an die Außenform der Turbinengehäuse-Außenwand 6 angepasst, so dass sie sich in Anbaulage des Ammoniakreaktors innig an die Turbinengehäuse-Außenwand 6 anschmiegt, vorzugsweise mit Berührungskontakt.

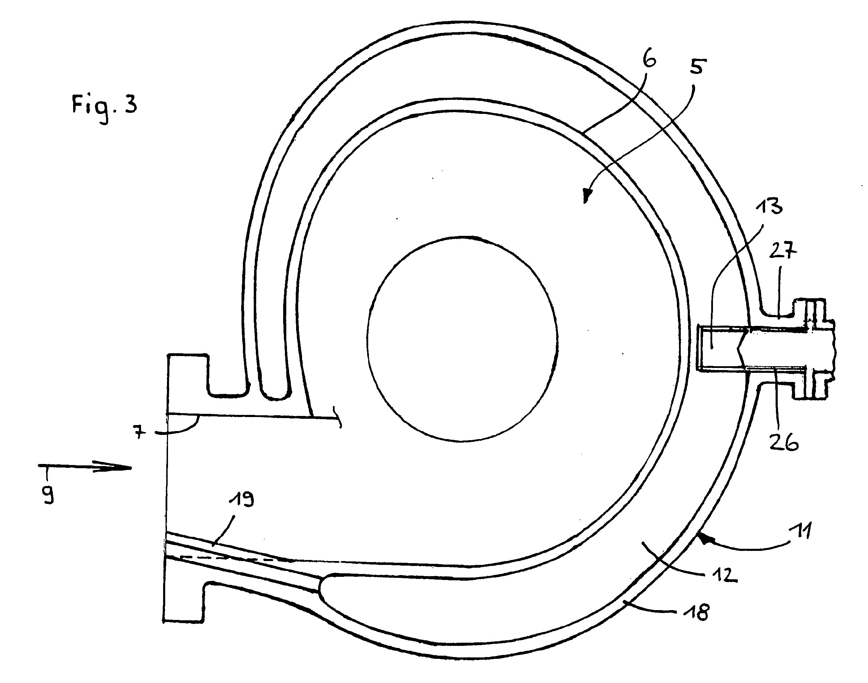

Unabhängig von der Realisierungsart des Ammoniakreaktors 11 steht dessen Verdampfungs-/Hydrolysierungskammer 12 über einen Kanal 19 (siehe Fig. 3) mit dem Abgasweg vor oder eingangs der Turbine 2 des Abgasturboladers 1 in Verbindung. Über diesen Kanal 19 ist die Verdampfungs-/Hydrolysierungskammer 12 mit einem Abgasteilstrom versorgbar, der sowohl zur Temperaturerhöhung in der Verdampfungs-/Hydrolysierungskammer 12 als auch als Quelle für Wasserdampf dient, der zur vollständigen Umwandlung der bei der Ammoniakerzeugung zunächst entstehenden Isocyansäure in Ammoniak und Kohlendioxid dient.

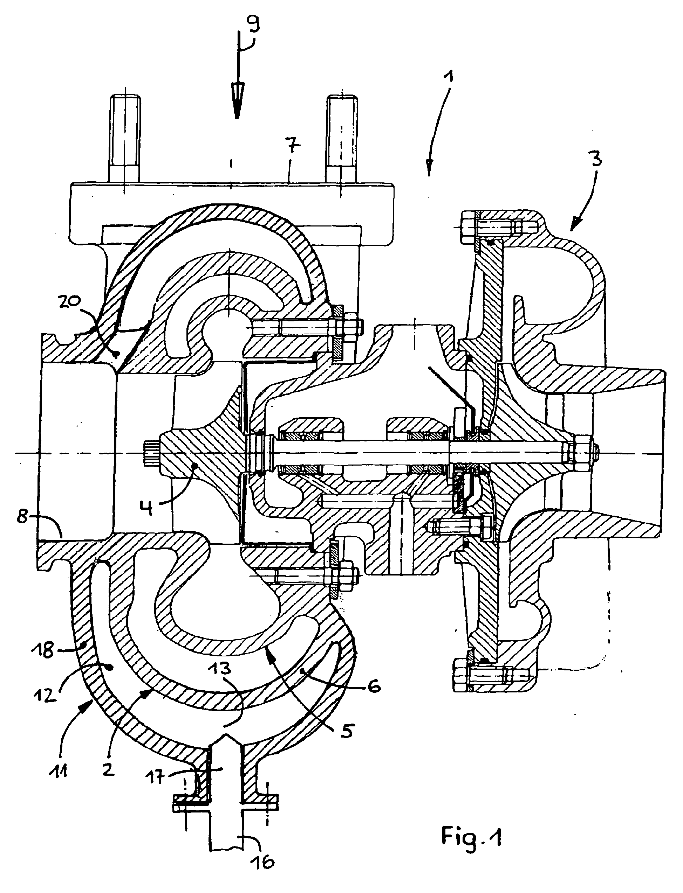

Im Fall der Beispiele gemäß Fig. 1 bis 3 ist der Kanal 19 durch eine Bohrung im EinlassBereich 7 des Turbinengehäuses realisiert, die in die Verdampfungs-/Hydrolysierungskammer 12 ausmündet. In der vorstehend erwähnten Alternativausbildung des Ammoniakreaktors 11 wäre der Kanal 19 über eine Rohrleitung realisiert.

Der Kanal 19 kann als für eine bestimmte Abgasteilmenge permanent durchlässige Verbindung, alternativ aber auch als bedarfsweise mittels eines Schalt- und/oder Drosselventils auf Durchlass schaltbare oder auch hinsichtlich der Durchflussmenge regelbare Verbindung realisiert sein.

Ausgangsseitig steht die Verdampfungs-/Hydrolysierungskammer 12 des Ammoniakreaktors 11 über wenigstens einen Kanal 20 mit einer sich am Turbinenausgang 8 anschließenden Abgasleitung 10, 10a in Verbindung. Über diesen Kanal bzw. diese Kanäle 20 ist das im Ammoniakreaktor 11 erzeugte Ammoniak bzw. das dieses enthaltende Gasgemisch in den Abgastrakt 10, 10a überleitbar.

Beim Ausführungsbeispiel gemäß Fig. 2 schließt sich am Ausgang 8 des Turbinengehäuses 5 ein Abschnitt 10a der Abgasleitung 10 an, in den - noch nahe beim Abgasturbolader 1 - ein zur NO → NO₂-Umwandlung dienender Oxidationskatalysator 21 eingebaut ist.

Dieser Abgasleitungsabschnitt 10a mit dem eingebauten Oxidationskatalysator 21 ist außen mit Abstand von einem Rohr 22 umgeben, das sich ebenfalls am Ausgang 8 des Turbinengehäuses 5, dort dessen Stirnfläche 23 anschließt. In diesen so entstandenen Ringkanal 24 münden der wenigstens eine, hier mehrere Kanäle 20 aus. In diesem Fall wird demnach das im Ammoniakreaktor 11 erzeugte Ammoniak bzw. das dieses enthaltende Gasgemisch in den Ringkanal 24 eingespeist, dann in diesem als Parallelstrom am Oxidationskatalysator 21 vorbeigeleitet und strömungsmäßig nach letzterem in den Abgasstrom eingespeist und dann von dort - vermischt mit dem mit NO₂ angereicherten Abgas - dem/den SCR-Katalysator(en) zugeführt. Die Kanäle 20 sind als Bohrungen ausgeführt, die von der äußeren Stirnfläche 23 des Turbinen-Auslasses 8 her durch den, den Turbinen-Auslass 8 umgebenden Turbinengehäusewandabschnitt hindurch in die Verdampfungs-/Hydrolysierungskammer 12 hineinführen.

Der Querschnitt des Kanals 20 bzw. Gesamtquerschnitt aller Kanäle 20 ist auf die Umwandlungsgeschwindigkeit des zur Ammoniakerzeugung herangezogenen Ausgangsmaterials - Harnstoff-Wasser-Lösung oder fester Harnstoff - abgestellt bemessen, dahingehend, dass dieser Umwandlungsprozess in Ammoniak vollständig und rückstandsfrei ablaufen kann.

Die die Verdampfungs-/Hydrolysierungskammer 12 begrenzende Wand kann innen mit einer die Umwandlung des Harnstoffes begünstigenden katalytischen Beschichtung, z. B. Titandioxid (TiO₂), versehen sein.

Außerdem könnte im Fall der Beispiele gemäß Fig. 1 bis 3 die Außenseite der Turbinengehäuse-Außenwand 6 - zwecks Erhöhung der wärmeabstrahlenden Fläche und damit der Wärmeeinleitung in die Verdampfungs-/Hydrolysierungskammer 12 - Rippen oder sonstige vorspringende Strukturen aufweisen.

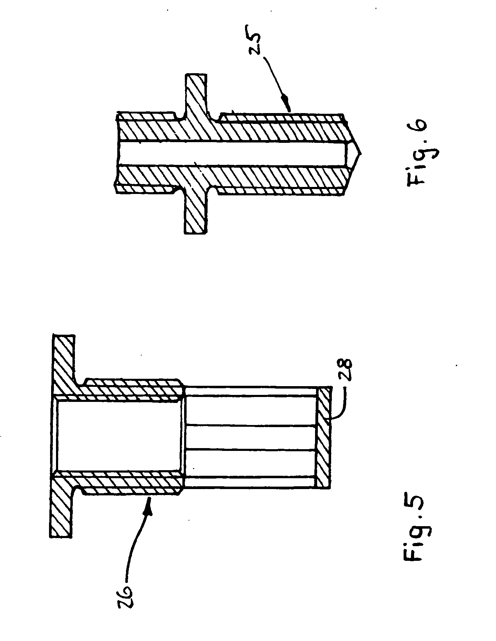

Zur Befestigung einer zur Einspeisung der Harnstoff-Wasser-Lösung dienenden Düse oder des Endstücks 25 eines Rohres für das Einschießen von festen Harnstoffprills (siehe Fig. 4) kann ein Halter 26 (siehe Fig. 5) vorgesehen sein, der in ein außen am Ammoniakreaktor 11 gegebenes Befestigungsauge 27 eingeschraubt ist und die Düse bzw. das Endstück 25 des schusskanalbildenden Rohres 16 aufnimmt.

Wie aus Fig. 5 ersichtlich, kann der Halter 26 an seinem reaktorinneren Ende eine Platte 28 aufweisen. Diese allseitig vom heißen Abgas umflutete Platte 28 kann als Heizplatte das erste Umwandlungselement für auftreffende Harnstoff-Wasser-Strahlen bilden. Im Fall von festem Harnstoff kann die Platte 28 als Prallplatte dienen, an der eingeschossene Harnstoffprills beim Auftreffen in eine Vielzahl von Kleinstpartikeln zertrümmerbar sind, die den Umwandlungsprozess in Ammoniak begünstigen.

Mit dem erfindungsgemäß um das Turbinengehäuse angeordneten Ammoniakreaktor ist es möglich, auf teure und platzbeanspruchende Hydrolysekatalysatoren zu verzichten. Der Ammoniakreaktor selbst beansprucht nur wenig Raum, der normalerweise um die Turbine eines Abgasturboladers ohnehin vorhanden ist oder frei bleibt. Außerdem ist der erfindungsgemäße Ammoniakreaktor im Endeffekt billiger als ein Hydrolysekatalysator realisierbar.

## Patentansprüche

1. Mittels Abgasturbolader aufgeladene Brennkraftmaschine, insbesondere Dieselmotor eines Fahrzeugs, in deren Abgasstrang eine Abgasnachbehandlungseinrichtung mit wenigstens einem SCR-Katalysator vorgesehen ist, dem Ammoniak als Reduktionsmittel zwecks Stickoxidreduzierung zuführbar ist, das in einem Ammoniakreaktor aus einer Harnstoff-Wasser-Lösung oder festem Harnstoff erzeugbar ist, **dadurch gekennzeichnet, dass** der Ammoniakreaktor (11) außen am Turbinengehäuse (5) des Abgasturboladers (1) - dessen thermische Abstrahlung für Ammoniakerzeugung nutzend - angeordnet ist, dass der Ammoniakreaktor (11) eine Verdampfungs-/Hydrolysierungskammer (12) aufweist, in die an geeigneter Stelle (13) entweder eine Harnstoff-Wasser-Lösung oder fester Harnstoff, insbesondere in Form von vorkonfektionierten kugelförmigen Harnstoffprills, in einer durch eine Dosiereinrichtung (15) bereitgestellten Menge einspeisbar ist, dass die Verdampfungs-/Hydrolysierungskammer (12) des Ammoniakreaktors (11) ausgangsseitig über wenigstens einen Kanal (20) mit dem sich an den Turbinenausgang (8) anschließenden Abgastrakt (10) in Verbindung steht, über welchen Kanal (20) das erzeugte Ammoniak bzw. das dieses enthaltende Gasgemisch in den Abgastrakt (10) überleitbar ist.

2. Brennkraftmaschine nach Anspruch 1, **dadurch gekennzeichnet, dass** der Ammoniakreaktor (11) mit dem Turbinengehäuse (5) des Abgasturboladers (1) eine bauliche Einheit bildet, bei der die Verdampfungs-/Hydrolysierungskammer (12) innen durch die Turbinengehäuse-Außenwand (6) und außen durch eine an letzterer mit angegossene Reaktor-Außenwand (18) begrenzt ist.

3. Brennkraftmaschine nach Anspruch 1, **dadurch gekennzeichnet, dass** der Ammoniakreaktor (11) durch eine eigenständig herzustellende Baueinheit gebildet ist, die außen am Turbinengehäuse (5) des Abgasturboladers (1) zu befestigen ist, wobei der Ammoniakreaktor (11) mit einem geschlossenen Gehäuse die Verdampfungs-/Hydrolysierungskammer (12) umfasst, wobei ferner zumindest die Innenwand dieses Gehäuses aus hochtemperaturfestem, hochwärmeleitenden und vorzugsweise auch korrosionsfreiem Material besteht, und wobei dieser Ammoniakreaktor (11) in Anbaulage sich mit der Innenwand seines Gehäuses an die Außenseite der Turbinengehäuse-Außenwand (6) formmäßig angepasst innig anschmiegt und mittelbar außen am Turbinengehäuse (5) befestigt ist.

4. Brennkraftmaschine nach einem der vorhergehenden Ansprüche, **dadurch gekennzeichnet, dass** die Verdampfungs-/Hydrolysierungskammer (12) des Ammoniakreaktors (11) über einen Kanal (19) mit dem Abgasweg vor oder eingangs der Turbine (2) des Abgasturboladers (1) verbunden und über diesen Kanal (19) mit einem Abgasteilstrom versorgbar ist, der sowohl zur Temperaturerhöhung in der Verdampfungs-/Hydrolysierungskammer (12) als auch als Quelle für Wasserdampf dient, der zur Umwandlung der bei der Ammoniakerzeugung entstehenden Isocyansäure in Ammoniak (NH₃) und Kohlendioxid (CO₂) führt.

5. Brennkraftmaschine nach einem der Ansprüche 1 bis 4, **dadurch gekennzeichnet, dass** sich am Ausgang (8) des Turbinengehäuses (5) ein Abschnitt (10a) des Abgastrakts (10) anschließt, in den benachbart zum Abgasturbolader (1) ein Oxidationskatalysator (21) zwecks NO → NO₂-Umwandlung eingebaut ist, dass dieser Abgastrakt-Abschnitt (10a) mit dem Oxidationskatalysator (21) außen mit Abstand von einem Rohr (22) umgeben ist, in welchen so entstandenen Ringkanal (24) wenigstens ein Kanal (20) ausmündet, der mit der Verdampfungs-/Hydrolysierungskammer (12) in Verbindung steht und über den das in dieser erzeugte Ammoniak bzw. das dieses enthaltende Gasgemisch in den Ringkanal (24) und von dort in den Abgasstrang strömungsmäßig nach dem Oxidationskatalysator (21) einleitbar und dann mit dem mit NO₂ angereicherten Abgas vermischt dem/den SCR-Katalysator(en) zuführbar ist.

6. Brennkraftmaschine nach Anspruch 4, **dadurch gekennzeichnet, dass** der Kanal (19) als für eine bestimmte Abgasteilmenge permanent durchlässige Verbindung realisiert ist.

7. Brennkraftmaschine nach Anspruch 4, **dadurch gekennzeichnet, dass** der Kanal (19) als mittels eines Schalt- und/oder Drosselventils bedarfsweise auf Durchlass schaltbare und/oder auch hinsichtlich der Durchlassmenge des Abgasteilstromes regelbare Verbindung realisiert ist.

8. Brennkraftmaschine nach einem der Ansprüche 1 und 5, **dadurch gekennzeichnet, dass** der Querschnitt des Kanals (20) bzw. der Gesamtquerschnitt aller Kanäle (20) auf die Umwandlungsgeschwindigkeit des zur Ammoniakerzeugung herangezogenen Ausgangsmaterials - Harnstoff-Wasser-Lösung oder fester Harnstoff - abgestellt bemessen ist, dahingehend, dass der Umwandlungsprozess in Ammoniak vollständig und rückstandsfrei ablaufen kann.

9. Brennkraftmaschine nach Anspruch 1, **dadurch gekennzeichnet, dass** die die Verdampfungs-/Hydrolysierungskammer (12) des Ammoniakreaktors (11) begrenzende Wand innen mit einer die Umwandlung des Harnstoffes begünstigenden katalytischen Beschichtung, wie Titandioxid (TiO₂), versehen ist.

10. Brennkraftmaschine nach Anspruch 2, **dadurch gekennzeichnet, dass** die Außenseite der Turbinengehäuse-Außenwand (6) zwecks Erhöhung der wärmeabstrahlenden Fläche und damit der Wärmeeinleitung in die Verdampfungs-/Hydrolysierungskammer (12) des Ammoniakreaktors (11) Rippen oder sonstige vorspringende Strukturen aufweist.

11. Brennkraftmaschine nach einem der vorhergehenden Ansprüche, **dadurch gekennzeichnet, dass** zur Befestigung entweder einer Düse (25) für Eindüsung der Harnstoff-Wasser-Lösung oder des Endstücks eines Rohres (16) für Einschießen von Harnstoffprills ein Halter (26) vorgesehen ist, der in ein außen am Ammoniakreaktor (11) gegebenes Befestigungsauge (27) eingeschraubt ist und die Düse bzw. das Endstück (25) aufnimmt.

12. Brennkraftmaschine nach Anspruch 11, **dadurch gekennzeichnet, dass** der Halter (26) an seinem reaktorinneren Ende eine Platte (28) aufweist, an der eingeschossene Harnstoffprills beim Auftreffen in eine Vielzahl von Kleinstpartikeln zertrümmerbar sind, oder die als allseitig vom Abgas umflutete Heizplatte das erste Umwandlungselement für auftretende Harnstoff-Wasser-Strahlen bildet.

## Claims

1. A turbo charged combustion engine, in particular the diesel engine of a vehicle, in the exhaust gas tract of which combustion engine an exhaust gas after-treatment device with at least one SCR catalytic converter is provided, to which catalytic converter ammonia is fed as a reduction agent for the purpose of reduction of nitrogen oxides, which ammonia can be produced in an ammonia reactor from a urea water solution or from solid urea, **characterised in that** the ammonia reactor (11) is arranged on the outside of the turbine housing (5) of the exhaust gas turbocharger (1) - the thermal radiation of which exhaust gas turbocharger (1) is useful for the production of ammonia -, that the ammonia reactor (11) features an evaporation/hydrolysis chamber (12), into which, at a suitable position (13), either a urea water solution or solid urea, particularly in the form of pre-manufactured spherical prilled urea, can be fed in a volume prepared by a metering device (15), that the evaporation/hydrolysis chamber (12) of the ammonia reactor (11) is connected at its outlet side via at least one duct (20) to the exhaust gas tract (10) connected to the turbine outlet (8), through which duct (20) the ammonia produced or the gas mixture containing the ammonia can be fed into the exhaust gas tract (10).

2. Combustion engine according to claim 1, **characterised in that** the ammonia reactor (11) forms a structural unit with the turbine housing (5) of the exhaust gas turbocharger (1), whereby the evaporation/hydrolysis chamber (12) is limited on the inside by the external wall of the turbine housing (6) and on the outside by an external wall (18) of the reactor cast onto the latter external wall of the turbine housing (6).

3. Combustion engine according to claim 1, **characterised in that** the ammonia reactor (11) is formed by a structural component to be produced separately, which structural component is to be fixed to the outside of the turbine housing (5) of the exhaust gas turbocharger (1), whereby the ammonia reactor (11) surrounds the evaporation/hydrolysis chamber (12) with a sealed housing, whereby moreover at least the internal wall of this housing is made from high temperature-resistant, highly thermoconductive and preferably also corrosion-free material and whereby, in its mounting position, the shape of the internal wall of the housing of this ammonia reactor (11) follows closely the shape of the external wall (6) of the turbine housing and is fixed directly to the outside of the turbine housing (5).

4. Combustion engine according to one of the claims above, **characterised in that** the evaporation/hydrolysis chamber (12) of the ammonia reactor (11) is connected via a duct (19) to the exhaust gas path upstream of or at the entrance to the turbine (2) of the exhaust gas turbocharger (1) and via this duct (19) can be supplied with a partial exhaust gas flow, which partial exhaust gas flow is used both to raise the temperature in the evaporation/hydrolysis chamber (12) and also as the source of water vapour, which water vapour leads to the conversion of the isocyanuric acid produced in the generation of ammonia into ammonia (NH₃) and carbon dioxide (CO₂).

5. Combustion engine according to one of claims 1 to 4, **characterised in that** a section (10a) of the exhaust gas tract (10) is connected to the outlet (8) of the turbine housing (5), into which section adjacent to the exhaust gas turbocharger (1) an oxidation catalytic converter (21) is fitted for the purpose of NO -> NO₂ transformation, that the outside of this exhaust gas tract section (10a) with the oxidation catalytic converter (21) is enclosed with a gap by a pipe (22), into which circular duct (24) thus produced at least one duct (20) ends, which duct (20) is connected to the evaporation/hydrolysis chamber (12) and via which duct (20) the ammonia produced therein or the gas mixture containing this respectively can be fed into the circular duct (24) and from there can be fed into the exhaust gas tract downstream of the oxidation catalytic converter (21) and then mixes with the exhaust gas enriched with NO₂ and can be fed to the SCR catalytic converter(s).

6. Combustion engine according to claim 4, **characterised in that** the duct (19) is designed as a connection that allows a specified partial volume of exhaust gas to pass through continuously.

7. Combustion engine according to claim 4, **characterised in that** the duct (19) is designed as a connection that can be switched by means of a switching valve and/or butterfly valve as required to permit a flow and/or can be regulated in relation to the volume of the partial flow of exhaust gas.

8. Combustion engine according to one of claims 1 to 5, **characterised in that** the cross-section of the duct (20) or of the total cross-section of all of the ducts (20) respectively is sized taking into account the conversion speed of the raw material - urea water solution or solid urea - used to generate the ammonia, to the effect that the conversion process into ammonia can be performed completely and without residue.

9. Combustion engine according to claim 1, **characterised in that** the inside of the wall confining the evaporation/hydrolysis chamber (12) of the ammonia reactor (11) is provided with a catalytic coating, such as titanium dioxide (TiO₂), to promote the conversion of the urea.

10. Combustion engine according to claim 2, **characterised in that** the outside of the external wall (6) of the turbine housing features ribs or other protruding structures for the purpose of increasing the thermal radiating surface and thereby increasing the induction of heat into the evaporation/hydrolysis chamber (12) of the ammonia reactor (11).

11. Combustion engine according to one of the above claims, **characterised in that** a bracket (26) is provided to fix either a nozzle (25) to feed in the urea water solution or the end piece of a pipe (16) to inject prilled urea, which bracket (26) is screwed into a fixing eye (27) arranged on the outside of the ammonia reactor (11) and which bracket (26) accommodates the nozzle or the end piece (25) respectively.

12. Combustion engine according to claim 11, **characterised in that** the bracket (26) features a plate (28) at its end on the inside of the reactor, on which plate the injected prilled urea can be dispersed into a multitude of ultra-small particles on meeting it, or which plate, as a heating plate passed on all sides by the exhaust gas, forms the first conversion element for the emerging urea-water jets.

## Revendications

1. Moteur à combustion interne suralimenté par turbocompresseur, en particulier moteur diesel d'un véhicule, dont la ligne d'échappement comprend un dispositif de posttraitement des gaz d'échappement avec au moins un catalyseur SCR, auquel peut être ajouté de l'ammoniaque en tant qu'agent de réduction pour réduire les oxydes d'azote, cet agent de réduction pouvant être produit dans un convertisseur d'ammoniaque à partir d'une solution urée-eau ou de l'urée solide, **caractérisé en ce que** le convertisseur d'ammoniaque (11) est disposé à l'extérieur sur le carter de turbine (5) du turbocompresseur (1) profitant ainsi de son rayonnement thermique pour la production de l'ammoniaque, **en ce que** le convertisseur d'ammoniaque (11) présente une chambre d'évaporation/hydrolysation (12) dans laquelle peut être injectée, à un endroit approprié (13), soit une solution eau-urée soit de l'urée solide, en particulier sous forme de granulés d'urée en forme de boule préconfectionnés, dans une quantité fournie par un dispositif de dosage (15), **en ce que** la chambre d'évaporation/hydrolysation (12) du convertisseur d'ammoniaque (11) est reliée, côté sortie, à la ligne d'échappement (10) adjacente à la sortie de la turbine (8) par l'intermédiaire d'au moins un conduit (20), celui-ci permettant de faire passer l'ammoniaque produit ou le mélange de gaz contenant celui-ci dans la ligne d'échappement (10).

2. Moteur à combustion interne selon la revendication 1, **caractérisé en ce que** le convertisseur d'ammoniaque (11) forme une unité constructive avec le carter de turbine (5) du turbocompresseur (1), unité constructive sur laquelle la chambre d'évaporation/hydrolysation (12) est limitée à l'intérieur par la paroi extérieure (6) du carter de turbine et à l'extérieur par une paroi extérieure (18) du convertisseur appliquée par coulée sur la paroi extérieure (6).

3. Moteur à combustion interne selon la revendication 1, **caractérisé en ce que** le convertisseur d'ammoniaque (11) est formé d'une unité constructive fabriquée de manière séparée, qui doit être fixée à l'extérieur sur le carter de turbine (5) du turbocompresseur (1), auquel cas le convertisseur d'ammoniaque (11) encercle avec un carter fermé la chambre d'évaporation/hydrolysation (12), auquel cas en plus au moins la paroi intérieure de ce carter se compose d'un matériau résistant aux températures élevées, assurant une très bonne conduction thermique et, de préférence, inoxydable et auquel cas ce convertisseur d'ammoniaque (11) s'adapte en position montée, grâce à sa forme, avec la paroi intérieure de son carter parfaitement à la face extérieure de la paroi extérieure (6) du carter de turbine et est fixé indirectement à l'extérieur sur le carter de turbine (5).

4. Moteur à combustion interne selon l'une des revendications précédentes, **caractérisé en ce que** la chambre d'évaporation/hydrolysation (12) du convertisseur d'ammoniaque (11) est reliée par l'intermédiaire d'un conduit (19) à la ligne des gaz d'échappement en amont ou à l'entrée de la turbine (2) du turbocompresseur (1) et peut être alimentée, par l'intermédiaire de ce conduit (19), avec un flux partiel des gaz d'échappement, qui sert aussi bien à augmenter la température dans la chambre d'évaporation/hydrolysation (12) et que de source de la vapeur d'eau conduisant à la transformation de l'acide isocyanique, produit lors de la production de l'ammoniaque, en ammoniac (NH₃) et dioxyde de carbone (CO₂).

5. Moteur à combustion interne selon l'une des revendications 1 à 4, **caractérisé en ce qu'**une section (10a) de la ligne d'échappement (10) est adjacente à la sortie (8) du carter de turbine (5), section dans laquelle est monté, dans le voisinage du turbocompresseur (1), un catalyseur à oxydation (21) servant à la transformation NO -> NO₂, **en ce que** cette section (10a) de la ligne d'échappement avec le catalyseur à oxydation (21) est entourée à l'extérieur, de manière distante, par un tube (22) et qu'au moins un conduit (20) débouche sur le conduit annulaire (24) ainsi formé, le conduit (20) étant relié à la chambre d'évaporation/hydrolysation (12) et par l'intermédiaire duquel l'ammoniac produit dans cette dernière ou le mélange de gaz que cette dernière contient peut être introduit dans le conduit annulaire (24) et de là, dans le sens du flux, dans la ligne d'échappement en aval du catalyseur à oxydation (21), puis amené, après mélange avec les gaz d'échappement enrichis de NO₂, vers le/les catalyseur(s) SCR.

6. Moteur à combustion interne selon la revendication 4, **caractérisé en ce que** le conduit (19) est réalisé sous forme d'une liaison permettant en permanence le passage d'une certaine quantité partielle des gaz d'échappement.

7. Moteur à combustion interne selon la revendication 4, **caractérisé en ce que** le conduit (19) est réalisé sous forme de liaison commutable si nécessaire sur passage au moyen d'une vanne de commutation et/ou d'étranglement et/ou réglable en ce qui concerne le débit de passage du flux partiel des gaz d'échappement.

8. Moteur à combustion interne selon l'une des revendications 1 à 5, **caractérisé en ce que** la section transversale du conduit (20) ou la section transversale totale de tous les conduits (20) est calculée de manière adaptée à la vitesse de transformation du produit d'origine - solution urée-eau ou urée solide - utilisé pour la production de l'ammoniaque de manière à ce que le processus de transformation en ammoniac puisse se dérouler complètement et sans résidus.

9. Moteur à combustion interne selon la revendication 1, **caractérisé en ce que** la paroi limitant la chambre d'évaporation/hydrolysation (12) du convertisseur d'ammoniaque (11) est pourvue à l'intérieur d'un revêtement catalytique, tel que le dioxyde de titane (TiO₂), favorisant la transformation de l'urée.

10. Moteur à combustion interne selon la revendication 2, **caractérisé en ce que** la face extérieure de la paroi extérieure (6) du carter de turbine présente des nervures ou d'autres structures en saillie pour augmenter la surface exothermique et donc l'introduction de chaleur dans la chambre d'évaporation/hydrolysation (12) du convertisseur d'ammoniaque (11).

11. Moteur à combustion interne selon l'une des revendications précédentes, **caractérisé en ce qu'**un support (26) est prévu pour la fixation soit d'une buse (25) pour l'injection de la solution urée-eau ou de l'embout d'un tuyau (16) pour l'injection de granulés d'urée, ce support étant vissé dans un oeillet de fixation (27) prévu à l'extérieur sur le convertisseur d'ammoniaque (11) et qui sert de logement à la buse (25) ou à l'embout.

12. Moteur à combustion interne selon la revendication 11, **caractérisé en ce que** le support (26) présente, sur son extrémité à l'intérieur du convertisseur, une plaque (28) sur laquelle les granulés d'urée injectés peuvent être pulvérisés, lors de leur impact, en une multitude de particules minimes ou qui forme, sous forme de plaque de chauffage entourée de gaz d'échappement sur tous les côtés, le premier élément de transformation des jets d'urée-eau produits.
